(19) Europäisches Patentamt / European Patent Office / Office européen des brevets

(11) **EP 3 168 998 A1**

(12) **EUROPEAN PATENT APPLICATION**

(43) Date of publication:
17.05.2017 Bulletin 2017/20

(21) Application number: 15306783.0

(22) Date of filing: 10.11.2015

(51) Int Cl.:
*H04B 7/02* (2017.01)      *H04B 7/04* (2017.01)
*H04B 7/08* (2006.01)     *H04L 1/00* (2006.01)
*H04W 52/00* (2009.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **ALCATEL LUCENT**
**92100 Boulogne-Billancourt (FR)**

(72) Inventors:
• **FANG, Dong**
  **15 Dublin (IE)**
• **CLAUSSEN, Holger**
  **15 Dublin (IE)**

(74) Representative: **Sarup, David Alexander**
**Alcatel-Lucent Telecom Ltd**
**Intellectual Property Business Group**
**Christchurch Way**
**Greenwich**
**London SE10 0AG (GB)**

(54) **A CONTROLLER, A TRANSMITTING NETWORK, A USER TERMINAL, AND A METHOD OF MULTIPOINT JOINT TRANSMISSION DOWNLINK**

(57)     A method is provided of multipoint joint transmission downlink of user data from a plurality of base stations for wireless communications to at least one user terminal, in which the user data at each base station are encoded as Low Density Lattice, LDL, codewords and the codewords are transmitted over air.

Fig. 4

EP 3 168 998 A1

**Description**

**Field of the Invention**

The present invention relates to telecommunications, in particular to wireless telecommunications.

**Description of the Related Art**

The standardisation work for fifth generation (5G) radio access networks (RAN) that is being conducted by the Third Generation Partnership (3GPP) is aiming at very high capacity densities, for example of up to 25 Gbit/s/km2, see for example S. Liu and J. Wu "A 25 Gbit/s(/km2) urban wireless network beyond IMT Advanced" IEEE Communications Magazine, vol. 49, no. 2, pp. 122-129, February 2011. In consequence, cell sizes will be reduced so as to be femtocells or picocells, requiring much larger numbers of base stations or access points.

As regards the downlink direction (i.e. towards the user terminals) of 5G Radio Access Networks having centralized processing, it has shown that by distributing a precoding matrix over the wireless cellular base stations, the coordinated transmission which is enabled by the precoding may resolve inter-cell interference. An example of this is multicell precoding as described in the paper by E. Björnson, R. Zakhour, D. Gesbert, and B. Ottersten, entitled "Cooperative multicell precoding: Rate region characterization and distributed strategies with instantaneous and statistical CSI," IEEE Trans. Signal Process., vol. 58, no. 8, pp. 4298-4310, Aug. 2010. The multicell precoding scheme increases the efficiency of the network both in terms of spectrum and energy. However, there is a significant increase in the backhaul load of network since generating the precoded streams requires distributing all users' data streams to all the base stations.

3GPP have initiated a discussion (see Chairman's notes, 3GPP RANI 80bis meeting, April 2015) which mentioned another known approach for the downlink of 5G Radio Access Networks, namely multiuser sparse code multiple access based coordinated multipoint (MU-SCMA-CoMP), see U. Vilaipornsawai, et al., "SCMA for Open-Loop Joint Transmission CoMP," Cornell University Library CoRR abstract/1504.01747 (2015)

In this approach, the base station employs a sparse code to encode the data stream and then maps the resulted codeword into the multidimensional lattice constellation. Then, base stations superimpose the resulted lattice codewords based on the optimal power sharing optimization. After broadcasting to all user terminals (often referred to simply as users), the user terminals with good channel conditions adopt joint multidimensional lattice detection to extract all users' data while those with poor channel conditions treat the interference as noise and only extract their desired signals. However, when numbers of user terminals and base stations are large, the numbers of variables of the power sharing optimization described in the above-mentioned Vilaipornsawai, et al paper are correspondingly increased and hence this multivariable optimization might be unsolvable. In the MU-SCMA-CoMP approach described in the above-mentioned Vilaipornsawai, et al paper, the number of base stations that can be grouped for joint transmission is at most two and that of users is at most three. And similarly to the conventional multicell precoding, if the numbers of base stations and user terminals are large, the MU-SCMA-CoMP also results in a heavy backhaul load as all users' data have to be transmitted to all base stations. These drawbacks limit its practical usage in large scale networks.

In recent years, multicell precoding, also known as distributed MIMO precoding, has been found to have an interference resolving capability. In multicell precoding, a cluster of several base stations cooperate to serve multiple user terminals (user equipments, UE), so that the combination of base stations and user terminals operate as a large multiuser distributed MIMO system. By distributing the precoding matrix over several base stations, this coordinated transmission enabled by the precoding may reduce inter-cell interference. These base stations may operate within the same radio resources without causing mutual interference. Thus, multicell precoding has the potential to increase the capacity of cellular systems. However, it also increases the backhaul load: for example, on the downlink, all desired signals of user terminals are forwarded to all base stations. This is unsuitable for fifth generation (5G) radio access networks having centralized processing, such as the ultra dense small-cell networks, as they are likely to have large backhaul loads in consequence.

Low density Lattice codes are known; for background on them see N. Sommer, M. Feder, and O. Shalvi, "Low-density lattice codes," Information Theory, IEEE Transactions on, vol. 54, no. 4, pp. 1561-1585, April 2008.

**Summary**

The reader is referred to the appended independent claims. Some preferred features are laid out in the dependent claims.

An example of the present invention is a method of multipoint joint transmission downlink of user data from a plurality of base stations for wireless communications to at least one user terminal, in which the user data at each base station are encoded as Low Density Lattice, LDL, codewords and the codewords are transmitted over air.

Preferred embodiments provide a coordinated multipoint joint transmission scheme for downlink in Fifth Generation Radio Access Networks (5G RAN). In preferred embodiments, Low Density Lattice Codes (LDLC) are applied to a downlink distributive Multiple-Input Multiple-Output (MIMO) channel for encoding and modulating the data stream. LDLC is a natural coded modulation scheme over multi-dimensions and capable of sufficient capacity. The structural properties of LDLC allow interference to be resolved. An LDLC codeword is transmissible by various physical resources, for example an n-dimensional lattice codeword can be transmitted over *n* symbol periods, *n* OFDM subcarriers or *n* antennas.

Preferred embodiments provide a method of joint transmission based on lattice codes for 5G RAN.

Preferred embodiments provide an approach of joint transmission for 5G RAN with centralized processing and with a reasonably low backhaul load, and provide a scalable solution to downlink transmission over large scale networks. In preferred embodiments, the precoding procedure, and user scheduling and decoding at both the base station and user terminal sides, have low computational complexity , for example as compared with the known MU-SCMA-CoMP approach.

As compared to the known MU-SCMA-CoMP approach referred to above, preferred embodiments reduce the backhaul bandwidth requirements by Nx, while the spectral efficiency is improved by (N/2)x for a network with N base stations and N user termninals.

Preferably, there are multiple user terminals and the method is a distributed Multiple-Input Multiple-Output, MIMO, method.

Preferably, a controller precodes the user data and provides the precoded user data to the base stations for transmission. Preferably, the precoded user data is provided to the base stations over backhaul links. Preferably the controller controls the transmission powers of the base stations. Preferably, the controller receives channel state information from the base stations and determines a power control matrix. Preferably, the controller derives a network transfer function from the power control matrix, and uses the network transfer function in precoding user data for transmission. Preferably the controller sends the power control matrix to the base stations for controlling transmission power of signals onto which the user data is modulated.

Examples of the present invention also relates to corresponding apparatus.

Another example of the present invention relates to a controller for controlling multiple cellular wireless communications base stations for joint transmission downlink of user data, the controller being configured to:

receive channel state information from the base stations and determine a power control matrix,
derive a network transfer function from the power control matrix,
use the network transfer function in precoding user data for transmission,
send the user data to the respective base stations for transmission downlink over air,
send the power control matrix to the base stations for controlling transmission power of signals onto which the user data is modulated.

In preferred embodiments, the precoding function is applied to the data stream (finite field) in contrast to known precoding approaches where the precoding function is applied to modulated signals (complex field). In preferred embodiments, this enables SISO LDLC decoding in the downlink distributive MIMO channel. In preferred embodiments, this provides a scalable solution even for networks of large dimension as the inversion over a binary or integer matrix that results provides low computational complexity.

In preferred embodiments, each precoded data stream is transmitted to the corresponding base station from the controller via the backhaul, and there is no need to distribute all of a user terminal's desired signals to all base stations. Accordingly there may be significantly less backhaul load than in known approaches of known multicell precoding and known MU-SCMA-CoMP described in the above-mentioned Vilaipornsawai, et al paper. For example, suppose there are K base stations serving L UEs and each base station transmits with a rate up to *a* bits/symbol. The total backhaul load is then *aK* bits/symbol while that of known precoding would be *aKL* bits/symbol. So, for example, for a network with ten user terminals, the backhaul load would be reduced ten-fold.

In preferred embodiments, a downlink power control scheme is provided which facilitates the decoding by user terminals of the linear combination with a minimised channel rounding noise, or in other words minimised effective interference. In preferred embodiments, the controller directly controls the transmission powers of the base stations by control signalling over the backhaul. This facilitates downlink base station cooperation and is not limited as to the number of base stations. For example, more than two base stations may be coordinated (unlike in the known MU-SCMA-CoMP mentioned above which only allows two base stations to be coordinated). Also, in contrast to the known MU-SCMA-CoMP mentioned above, in preferred embodiments no exhaustive user-pairing algorithm is required. Furthermore, in contrast to known approaches, no global equalization matrix need be calculated.

In preferred embodiments, the central unit of 5G RAN precodes the user terminals' desired signals over finite field and transmits each precoded signal to the corresponding base station. This reduces to a large extent the backhaul load (as compared to known multicell precoding in which all users' desired signals have to be transmitted to all base stations to form the distributed MIMO precoder). In preferred embodiments, the precoding over finite field also provides feasibility in large scale networks as the matrix calculation over finite field results in lower computational complexity compared with that in complex field. In preferred embodiments, the precoding matrix is obtained by finding the optimal power allocation scheme which minimizes the co-channel interference. Furthermore in preferred embodiments, the power control facilitates rounding of the received superimposed signal at each user terminal to an integer combination of base stations' codewords such that the linearity of lattice codewords may exploited. In preferred embodiments, the complexity of this cooperation is mainly raised by the rounding function over channels, which is very low. In preferred embodiments, the rounding operation at each user termninal is operated in a distributive and element-wise manner, and hence this operation's computational complexity is low.

Another example of the present invention is a transmitting network comprising the controller and the multiple base stations which are connected to the controller, in which the base stations encode their respective user data onto Low Density Lattice code words and the code words are modulated onto carrier signals for transmission.

Preferably, the base stations transmit at powers specified in the power control matrix.

Another example of the present invention relates to a user terminal configured to receive user data from multiple transmitters, the user data from each transmitter having being encoded as a Low Density Lattice codeword, and the multiple Low Density Lattice codewords having been transmitted so as to be received as a combined signal at the receiver, the receiver comprising:

a receiving stage configured to receive the signal;
an iterative processing stage configured to provide a linear combination, the iterative processing stage comprising:

a processor configured to calculate coefficients of the linear combination of the codewords from the multiple transmitters,
a processor configured to calculate a scaling factor to be applied to the signal based on the coefficients,
a processor configured to apply the scaling factor to the signal to provide a linear combination of the codewords, and
a decoder configured to estimate the user data based on channel state information and the linear combination of the codewords.

In preferred embodiments, at the user terminal a single-input single-output (SISO) LDLC decoder is provided which extracts linear combinations of signals from multiple base stations (rather than separating them). This decoder facilitates the use of LDLC in a downlink distributive MIMO channel. In preferred embodiments, the SISO LDLC decoder extracts the linear combination of signals from the base stations, and respective of how many base stations jointly transmit signals, the decoding complexity at the user terminal side is linear.

Preferably the decoder is a Single-Input Single Output, SISO decoder.

Preferably the channel coefficients of the received signal are rounded into integer values by the iterative processing stage.

## Brief Description of the Drawings

Embodiments of the present invention will now be described by way of example and with reference to the drawings, in which:

Figure 1 is a diagram illustrating a known fifth generation (5G) radio access network (PRIOR ART),
Figure 2 is a diagram illustrating known multicell precoding (PRIOR ART),
Figure 3 is a diagram illustrating the known MU-SCMA-CoMP approach for downlink transmissions (for simplicity two base stations and two user terminals are shown) (PRIOR ART),
Figure 4 is a diagram illustrating a fifth generation (5G) radio access network according to a first embodiment of the present invention,
Figure 5 is a diagram illustrating operation for downlink data transmission of the network shown in Figure 4,
Figure 6 is a flow chart further illustrating the downlink data transmission operation shown in Figure 5,
Figure 7 illustrates in more detail the LDLC encoding shown in Figures 5, and
Figure 8 is a flowchart of the operation of a user terminal in decoding and user data recovery.

## Detailed Description

We first consider some known approaches after which we describe some example embodiments.

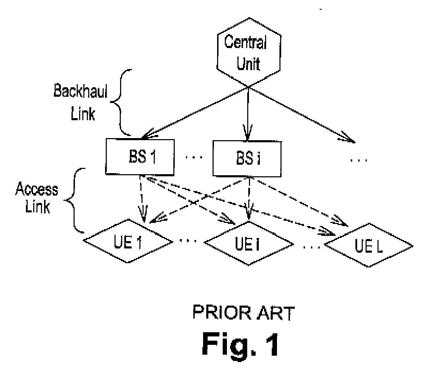

As shown in Figure 1, in a known fifth generation (5G) radio access network, for data transmission in a downlink direction, that is towards user terminals, there is data exchange between a central unit and base stations over backhaul links. These backhaul links have limited bandwidth and may be implemented as wireless or wireline links. In the downlink direction, the messages from the central unit are relayed to the user terminals via the base stations. The links between base stations and user terminals, referred to as access links, are wireless.

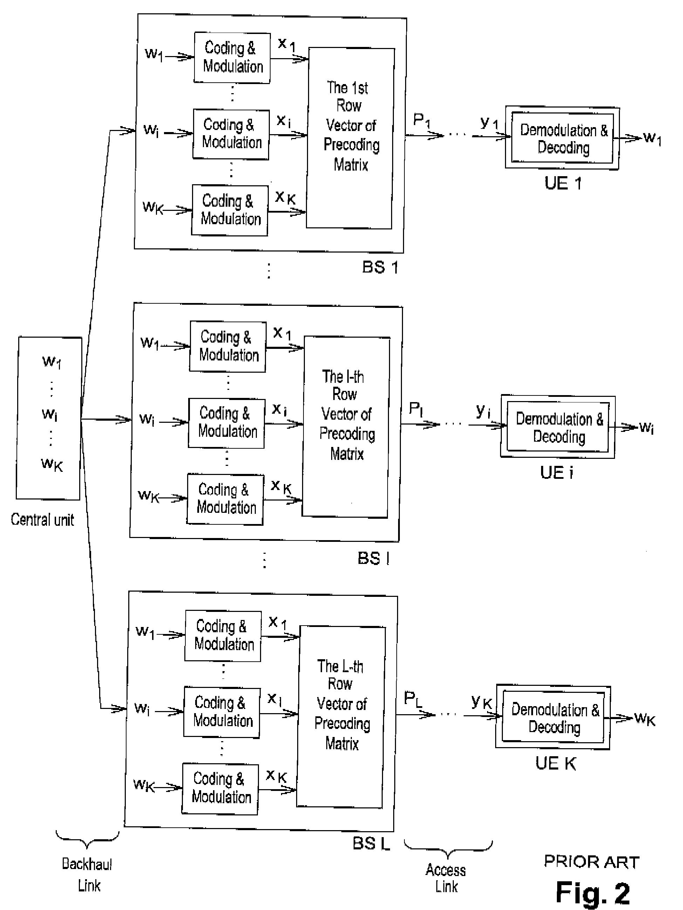

As shown in Figure 2, in this known example there are K user terminals (UEs) located at the edges of L base stations. The K user terminals are served by the L base stations in a known base station cooperation scheme, namely Network MIMO, where MIMO denotes Multiple-Input Multiple-Output.

As shown in Figure 2, a known precoding is used known as multicell precoding, where $w_i$ and $y_i$, $i \in \{1,...,K\}$, denote the desired and received signal of UE $i$, respectively; $x_\ell$ and $P_\ell$, $\ell \in \{1,...,L\}$, denotes the modulated signal and its transmitting power at BS $\ell$, respectively. In this known multicell precoding approach, the central unit distributes the beam vectors of the precoding matrix to each base station such that the whole network effectively forms a distributed MIMO precoder. All desired signals of user terminals are transmitted to all base stations, where after application of a coding and modulation procedure, the modulated signals are multiplied by the beam vectors of the precoding matrix. The resulting signals at the base stations are then transmitted at a given power to all user terminals.

The inventors realised that inter-cell interference is resolved by use of this known distributed MIMO precoder. The inventors realised however that a disadvantage of this known multicell precoding is that as all desired signals for user terminals have to be transmitted to all base stations through the backhaul links, so the load on the backhaul links becomes high, excessively so when the numbers of base stations and/or user terminals are large. For example, suppose there are L BSs serving $K$ UEs and each BS transmits with a rate up to $a$ bits/symbol. In that case, the overall backhaul load of this known multicell precoding would be $aKL$ bit/symbol. This is very high in large scale networks.

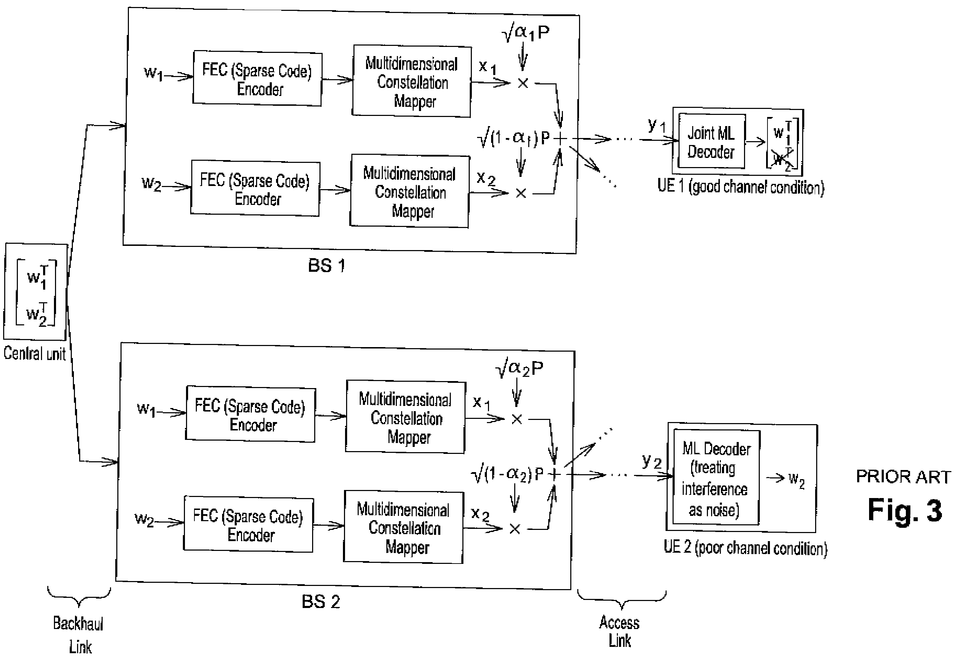

Turning to the known approach of multiuser sparse code multiple access based coordinated multipoint (MU-SCMA-CoMP), described in the paper by U. Vilaipornsawai, et al., "SCMA for Open-Loop Joint Transmission CoMP," Cornell University Library CoRR abstract /1504.01747 (2015), this known approach is shown in Figure 3.

The system model of MU-SCMA-CoMP is shown in Fig. 3, where $w_i$ and $y_i$, $i \in \{1,...,K\}$, denote the desired and received signal of UE $i$; $x_\ell$ and $P_\ell$, $\ell \in \{1,...,L\}$, denotes the modulated signal and its transmitting power at BS $\ell$, respectively. At each base station, the data stream for a user terminal is encoded with sparse code and the resulting codeword is mapped into the multidimensional lattice constellation. This MU-SCMA-CoMP uses a superposition coding approach to broadcast multiuser signals, where under a certain total power constraint, a power sharing optimization aiming at maximizing the sum-rate. The users are grouped by their locations in the corresponding cells, using appropriate user-pairing algorithms, for example: 1) a two base station network where two user terminals are located in the different cells adopts a remote-pairing algorithm; 2) a two base station network where two base stations are located in the same cell adopts a local-pairing algorithm; 3) a two base station network where two user terminals are located in the same cell while another user terminal is located in another cell adopts a dual-pairing algorithm.

In this approach, after broadcasting to all user terminals, the user terminals with good channel conditions adopt the joint Multidimensional Lattice (ML) detection to extract all users' data while the user terminals with poor channel conditions treat the interference as noise and only extract their desired signals. However, the inventors realised that this MU-SCMA-CoMP approach also has some drawbacks.

A first drawback of MU-SCMA-CoMP is the involved user pairing algorithms. According to the above-mentioned Chairman's notes, 3GPP RANI 80bis meeting, and the above-mentioned paper by U. Vilaipornsawai, et al., the number of base stations that can be grouped in the MU-SCMA-CoMP operation is at most two and the number of user terminals that can be included is at most three. When numbers of user terminals and base stations are large, the number of variables of power sharing optimization in the MU-SCMA-CoMP operation is correspondingly increased and hence this multivariable optimization may become unsolvable.

A second drawback is that the user pairing algorithm can only group a small number of base stations and user terminals, so for large scale networks, all base stations have to be divided into several groups, each of two base stations, with correspondingly allocated orthogonal bands or times slots to avoid interferences. This lowers the spectral efficiency.

Thirdly, in MU-SCMA-CoMP the backhaul load is high in large scale networks. This is because all user terminals' desired signals have to be transmitted to all base stations.

In view of these drawbacks, the inventors realised that the known MU-SCMA-CoMP approach is not a scalable solution for large scale networks.

We turn now to describing example embodiments.

The Network

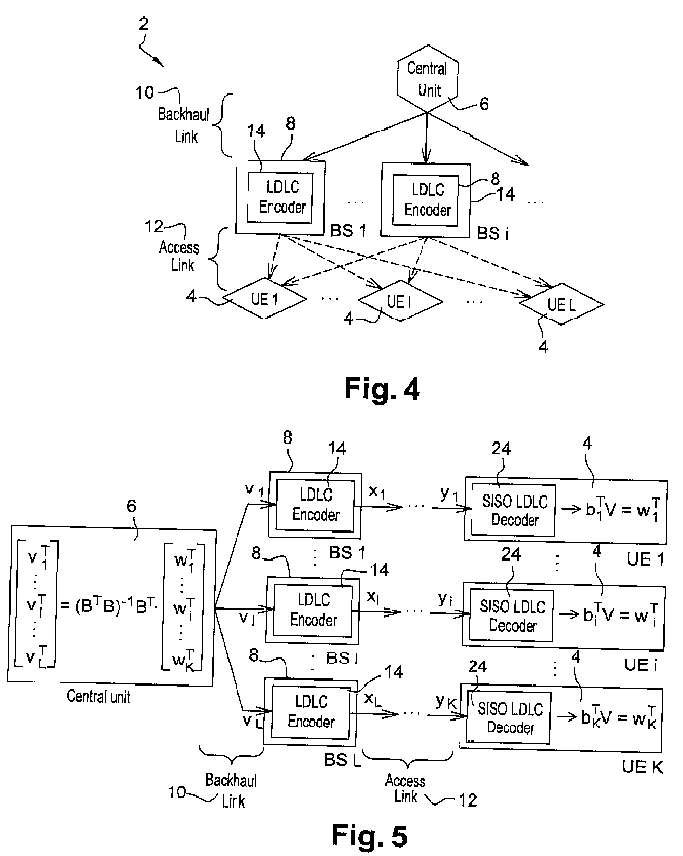

As shown in Figures 4, in a fifth generation (5G) radio access network 2, for data transmission in a downlink direction, that is towards user terminals 4, there is data exchange between a central unit 6 and base stations 8 over backhaul links 10. These backhaul links 10 have limited bandwidth and may be implemented as wireless or wireline links (wireline in this example). In the downlink direction, the messages from the central unit 6 are relayed to the user terminals 4 via the base stations 8. The links 12 between the base stations 8 and user terminals 4, referred to as access links, are wireless. Each base station 8 includes a Low Density Lattice Code (LDLC) encoder 14.

Operation

We will first provide an overview of operation of the network then go into more details regarding the various steps or stages involved.

Operation of the network is shown in mathematical overview in Figure 5. In Figure 5, $v_\ell$, $x_\ell$ and $P_\ell$, $\in \{1,...,L\}$, denote the user data stream, the lattice codeword, and the transmitting power, respectively; $\mathbf{y}_i$, $\mathbf{B}$, $\mathbf{b}_i$ and $\mathbf{r}_i$, $i \in \{1,...,K\}$, denote the received signal, coefficient matrix, row vector of coefficient matrix and decoded integer combination of user data, respectively.

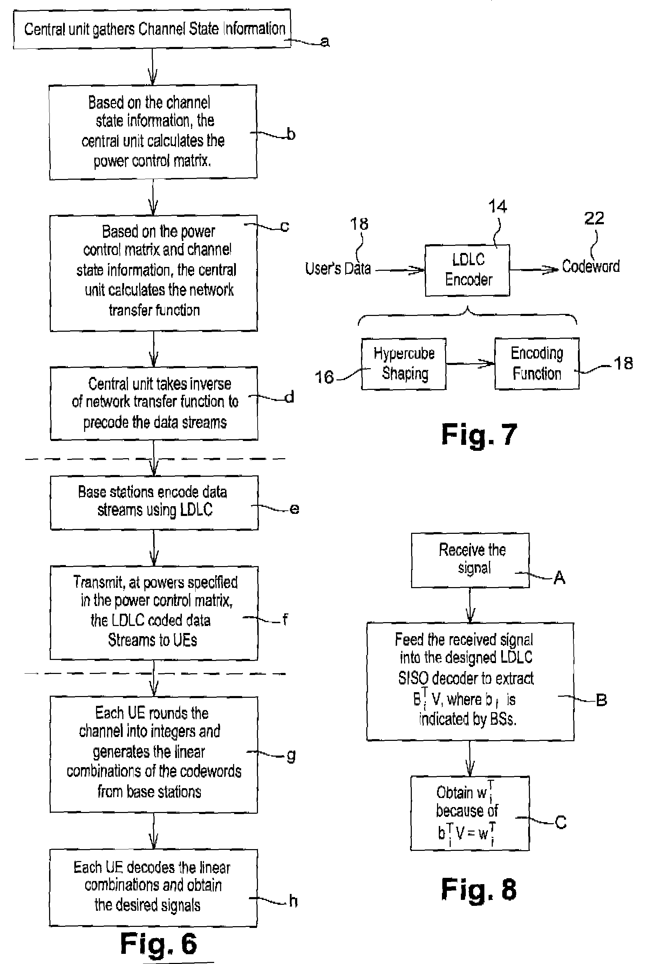

As shown in Figure 6, the main operating steps or stages in this operation of the network 2 are as follows.

The central unit 6 collects (step a) channel state information (CSI) from all the base stations 8, in this example in full version (unquantised CSI, in other words perfect CSI) feedback from user terminals in Time Division Duplex (TDD) mode. In other similar embodiments (not shown), the CSI may be quantised (in other words imperfect) such as Channel Quality Indicator CQI, Precoding Matrix Indicator PMI, Rank Indicator RI, DeModulation Reference Signal DM-RS and User Equipment Reference Signal UE-RS, etc).

From the CSI, the central unit calculates (step b) the optimal power control matrix that minimises self-interference also known as rounding noise, as described in more detail below.

From the CSIs and the power control matrix, the central unit 4 generates (step c) a network transfer function **B.**

A precoding matrix is derived from the network transfer function and is applied to precode (step d) the data streams prior to transmission. Specifically the inverse of **B**, namely, $(\mathbf{B}^T\mathbf{B})^{-1}\mathbf{B}^T$ is referred to as the precoding matrix, and is used to generated the precoded data stream given by $\begin{bmatrix} \mathbf{v}_1^T \\ \vdots \\ \mathbf{v}_L^T \end{bmatrix} = (\mathbf{B}^T\mathbf{B})^{-1}\mathbf{B}^T \cdot \begin{bmatrix} \mathbf{w}_1^T \\ \vdots \\ \mathbf{w}_K^T \end{bmatrix}$, where $3w_i, i \in \{1,...,K\}$ is the desired data stream of UE $i$.

The central unit 4 sends the precoded data streams $v_\ell$ to the corresponding base stations $\ell$, $\ell \in \{1,...,L\}$. Then base stations $\ell$ encode (step e, combining modulation and coding together) the precoded data streams $\mathbf{v}_\ell$ into a Low Density Lattice Code (LDLC) codewords $x_\ell$ for transmission. The code words are transmitted (step f).

Each user terminal UE $i$ receives the signals transmitted by the base stations and rounds (step g) the channels into integers $b_i$, where the integer coefficient $\mathbf{b}_i$ is considered as the row vector from **B**.

Then the user terminal decodes (step h) the linear combination of all codewords, i.e. $b_i V$, from base stations 8 using its respective SISO LDLC decoder 16.

The decoded linear combination $\mathbf{b}_i V$ directly equals to the UE $i$'s desired data stream $w_i$ (as can be seen from the precoding (step d) above).

The operation of the user terminal is also shown in Figure 8, where Step A is the receiving and rounding, step B is the decoding and Step C is the user data recovery.

The stages in more detail

These stages shown in Figure 6 and 8 are described in more detail as follows.

Power Control

Suppose there are $L$ base stations (BS) serving $K$ user terminals (UEs). The superimposed signal at the UE $i$ is theoretically of the following form

$$\mathbf{y}_i^T = \sum_{\ell=1}^{L} h_{i,\ell} \sqrt{P_\ell} \mathbf{x}_\ell^T + \mathbf{z}_i^T,$$

where $x_\ell$ is the transmitted lattice codeword of BS $\ell$ with dimension $n$ and power $P_\ell$; $h_{i,\ell}$ is the channel coefficient from BS $\ell$ to UE $i$; and $z_i \square CN(0,\sigma^2 I^n)$ is the noise.

Treating the network as a distributed MIMO system, the received signals at all UEs follow

$$\mathbf{Y} = \mathbf{HPX} + \mathbf{Z}$$

where $\mathbf{P} = \begin{bmatrix} \sqrt{P_1} & \cdots & 0 \\ \vdots & \ddots & \vdots \\ 0 & \cdots & \sqrt{P_L} \end{bmatrix}$ denotes the power matrix whose diagonal entries are the transmitting power of each base station.

The channel coefficients are rounded in order to form the integer combination of lattice codewords. Accordingly, the above-mentioned theoretical signal is expanded as

$$\mathbf{y}_i^T = \mathbf{h}_i^T \mathbf{P} \mathbf{X} + \mathbf{z}_i$$
$$= \lfloor \mathbf{h}_i^T \mathbf{P} \rceil \mathbf{X} + \underbrace{\left( \mathbf{h}_i^T \mathbf{P} - \lfloor \mathbf{h}_i^T \mathbf{P} \rceil \right) \mathbf{X} + \mathbf{z}_i^T}_{\mathbf{z}_{i,\text{eff}}^T},$$

where $\lfloor . \rceil$ denotes the element-wise rounding function and, $\mathbf{h}_i^T \mathbf{P} - \lfloor \mathbf{h}_i^T \mathbf{P} \rceil$ is the fractional part of $\mathbf{h}_i^T \mathbf{P}$. Here

$\mathbf{b}_i^T \square \lfloor \mathbf{h}_i^T \mathbf{P} \rceil$ denotes the coefficients of integer combinations, and $z_{i,\text{eff}}$ denotes the effective noise for the $i$-th UE.

The central unit determines the optimal power control matrix **P** and the precoding function is based on the determined power **P** and channels as described below.

The variance of the effective noise is given by

$$\sigma_{i,\text{eff}}^2 = \frac{1}{n} \mathrm{E} \left\| \left( \mathbf{h}_i^T \mathbf{P} - \lfloor \mathbf{h}_i^T \mathbf{P} \rceil \right) \mathbf{X} + \mathbf{z}_i^T \right\|^2$$
$$= \left\| \left( \mathbf{h}_i^T \mathbf{P} - \lfloor \mathbf{h}_i^T \mathbf{P} \rceil \right) \right\|^2 + \sigma^2$$

Based on the above rounding operation, we expand the theoretical signals as

$$\mathbf{Y} = \mathbf{HPX} + \mathbf{Z}$$
$$== \lfloor \mathbf{HP} \rceil \mathbf{X} + \underbrace{\left( \mathbf{HP} - \lfloor \mathbf{HP} \rceil \right) \mathbf{X} + \mathbf{Z}}_{\mathbf{z}_{\text{eff}}} .$$

The variance of the effective noise **Z** is calculated as

$$\sigma_{\text{eff}}^2 = \frac{1}{n} \mathrm{E} \left\| \left( \mathbf{HP} - \lfloor \mathbf{HP} \rceil \right) \mathbf{X} + \mathbf{Z} \right\|^2 ,$$
$$= \left\| \left( \mathbf{HP} - \lfloor \mathbf{HP} \rceil \right) \right\|^2 + \sigma^2$$

As the total power is constrained, the power control algorithm aims at minimizing the variance of the effective noise, given by

$$\tilde{\mathbf{P}} = \underset{\mathbf{P}}{\arg\min} \, \sigma_{\text{eff}}^2 = \underset{\mathbf{P}}{\arg\min} \left\{ \left\| \left( \mathbf{HP} - \lfloor \mathbf{HP} \rceil \right) \right\|^2 \right\} ,$$

$$\text{s.t.} \left\| \tilde{\mathbf{P}} \right\|^2 \le P_{\text{Sum}}, \text{rank} \left( \lfloor \mathbf{HP} \rceil \right) \ge L$$

where $P_{\text{sum}}$ is the power constraint. This above problem is solved by linear programming to give the determined power control matrix **P**.

Calculation of Network transfer Function

Based on the equation $\mathbf{b}_i^T \sqsubseteq \lfloor \mathbf{h}_i^T \mathbf{P} \rceil$, and with the determined power $\tilde{\mathbf{P}}$, the network transfer function denoted by **B**, whose row vector is $\mathbf{b}_i^T$, is calculated as $\mathbf{B} = \lfloor \mathbf{HP} \rceil$.

This optimal network transfer function **B** is a matrix that asymptotically maximises the downlink sum capacity.

This network transfer function is used in the precoding procedure as described next.

Precoding

Before transmitting signals over backhaul link to the base stations, the central unit precodes the desired data for the user terminals (UEs), denoted by $[\mathbf{w}_1,...,\mathbf{w}_K]^T$ as follows

$$
\begin{bmatrix} \mathbf{v}_1^T \\ \vdots \\ \mathbf{v}_L^T \end{bmatrix} = \left( \mathbf{B}^T \mathbf{B} \right)^{-1} \mathbf{B}^T \cdot \begin{bmatrix} \mathbf{w}_1^T \\ \vdots \\ \mathbf{w}_K^T \end{bmatrix},
$$

where $\mathbf{v}_\ell, \ell \in \{1,...,L\}$ is the precoded message which is transmitted to the base stations via the backhaul link.

Encoding

Individual dimensions of each codeword are then mapped to distinct OFDM subcarriers or single antenna element of MIMO system. The encoding procedure is shown in Figure 7.

As shown in Figure 7, in each LDLC encoder 14, Hypercube shaping 16 and Low Density Lattice Code (LDLC) encoding 18 are undertaken of input user data 20 so as to provide the codeword 22.

Let $F_\ell : Z^n \to R^n$ denote the modulation function used, which includes both the hypercube shaping and LDLC encoding as described below. At each base station 8, the resulting lattice codeword 22 is generated by $\mathbf{x}_\ell = \mathbf{F}_\ell(\mathbf{v}_\ell)$, $\ell \in \{1,...,L\}$.

This is explained in more detail as follows.

More explanation of Low Density Lattice Code Encoding and Hypercube shaping

An $n$-dimensional lattice, denoted by Λ, is a set of points in the $n$-dimensional real space, denoted by R", such that if **x**, **y** ∈ Λ, then **x** + **y** ∈ Λ; and if x ∈ Λ, then -x ∈ Λ. A lattice can always be written in terms of a lattice generator matrix $\mathbf{G} \in \mathbf{R}^{n \times n}$ Λ = {**x** = Gv : **v** ∈ $Z^n$}, where $Z^n$ denotes the $n$-dimensional integer vector space.

The low-density lattice code (LDLC) is constructed by extending the parity check and syndrome matrices of the well-known low-density parity check codes (LDPC) over finite field to real or complex field. An $n$ dimensional LDLC is an $n$-dimensional lattice code with a non-singular generator matrix **G** satisfying det |**G**| = 1, whose parity check matrix **W** = **G**$^{-1}$ is sparse.

The row or column degree of w is defined as the number of nonzero elements in row or column, respectively. A $n$-dimensional LDLC is regular if all the row degrees and column degrees of the parity check matrix are equal to a common degree $d$. A $n$-dimensional regular LDLC with degree $d$ is called "Latin square LDLC" if every row and column of the parity check matrix has the same nonzero values, except for a possible change of order and random signs. The sorted sequence of these d values will be referred to as the generating sequence of the Latin square LDLC.

Here is a simple example of the parity check matrix of a real LDLC with dimension $n$ = 6, row degree 4, column degree 3 and generating sequence {1,0.8,0.7,0.5},

$$\mathbf{W} = \begin{bmatrix} -0.8 & 0.7 & 0 & 0.5 & 0 & -1 \\ 0 & 0 & 1 & -0.5 & 1 & -0.8 \\ -0.5 & 1 & 0 & -0.8 & 0 & 0.5 \\ 1 & 0 & 0.8 & 0 & 0.5 & 0 \\ 0 & -0.5 & 0 & 1 & 0.8 & 0 \end{bmatrix}.$$

In practice, it is necessary to apply a shaping algorithm such that the LDLC codewords meet transmission power constraints. In this example, each base station adopts *hypercube shaping.* Hypercube shaping is based on a lower triangular parity-check matrix **w,** in which the integer information vector $\mathbf{v}_\ell$ is transferred to another integer vector $\mathbf{v'}_\ell$ such that $\mathbf{x'}_\ell = \mathbf{G}\mathbf{v'}_\ell$ satisfies the power constraint.

The hypercube shaping operation is given by

$$v'_{\ell,k} = v_{\ell,k} - Mr_{\ell,k},$$

where $r_{\ell,k}$ is calculated as

$$r_{\ell,k} = \left\lfloor \frac{1}{M} \left( v_{\ell,k} - \sum_{i=1}^{k-1} H_{k,i} x'_{\ell,i} \right) \right\rceil.$$

One infers $\mathbf{x'}_\ell = \mathbf{x}_\ell \bmod \Lambda$ from $\mathbf{v'}_\ell = \mathbf{v}_\ell \bmod M$ due to the linearity of LDLC.

Transmission

Each base station transmits its signal with the appropriate power determined by central unit. More specifically, at each base station 8 the resulting lattice code word 22 is transmitted at a power previously determined in the power control matrix **P** described above.

Decoding at User terminals

As such, the actual signals received by a user terminal after scaling may be represented as

$$\tilde{\mathbf{y}}_i^T = \mathbf{b}_i^T \mathbf{X} + \underbrace{\left( \mathbf{h}_i^T \tilde{\mathbf{P}} - \mathbf{b}_i^T \right) \mathbf{X} + \mathbf{z}_i^T}_{\mathbf{z}_{i,\mathrm{eff}}^T},$$

where $\mathbf{t}_i^T \square \mathbf{b}_i^T \mathbf{X}$ denotes the desired integer combination that will be passed through a SISO LDLC decoder 24 in the user equipment 4.

At the respective user terminal UE *i*, in order to decode the desired integer combination $\mathbf{t}_i$, the decoder 24 has to follow the following distribution

$$f_{T_i[j]|\mathbf{c}_i^T\tilde{\mathbf{Y}}_i^T}\left(t_i[j]\,|\,\mathbf{c}_i^T\tilde{\mathbf{y}}_i^T\right) \propto \sum_l \delta\left(t_i[j] - l[j]\right) \cdot \exp\left( -\frac{d^2\left(\mathbf{l}, \mathbf{c}_i^T\tilde{\mathbf{y}}_i^T\right)}{2\sigma_{i,\mathrm{eff}}^2} \right),$$

where $t_i[j]$ is the *j*-th component of $\mathbf{t}_i^T$; **l** is the lattice codeword and *l*[*j*] is the *j*-th component of it; $d(\mathbf{l}, \alpha\mathbf{y})$ denotes the Euclidean distance between $\mathbf{c}_i^T\tilde{\mathbf{y}}_i^T$ and **l**.

Expanding $\mathbf{t}_i$ as follows

$$\mathbf{t}_i^T = \mathbf{b}_i^T \mathbf{X} = \mathbf{b}_i^T \left( \mathbf{G}\mathbf{V} \right) = \mathbf{G} \cdot \underbrace{\mathbf{b}_i^T \mathbf{V}}_{\mathbf{r}_i^T},$$

where $\mathbf{t}_i$ itself is a valid codeword of LDLC such that $\mathbf{r}_i$, which is the integer combination of BSs' messages, is extracted after passing $\mathbf{t}_i$ through the SISO LDLC decoder 24, given by $\hat{\mathbf{r}}_i^T = \mathrm{LDLCDecoder}\left(\alpha \mathbf{y}_i^T\right)$, where $\hat{\mathbf{r}}_i$ is the estimated signal.

The decoder 24 iteratively estimates $f_{T_i[j]|\mathbf{c}_i^T \tilde{\mathbf{y}}_i^T}\left(t_i[j] \mid \mathbf{c}_i^T \tilde{\mathbf{y}}_i^T\right)$ by using Gallager's message passing algorithm over a real or complex field. However, the messages sent by the variable nodes are Probability Density Functions (PDFs) of the dimensional-wise component of $\mathbf{t}_i$ while the message sent by the check nodes are the periodic extensions of PDFs of dimensional-wise component of $\mathbf{t}_i$.

Let $t_i[1],...,t_i[j],...,t_i[n]$ and $c_i[1],...,c_i[j],...,c_i[n]$ denote the variable nodes and check nodes, respectively. Each variable node corresponds to a single element of the lattice codeword. Each check node corresponds to a check equation, in other words a row of matrix W.

The SISO decoder 24 for LDLC lattice combination $\mathbf{t}_i$ may be summarized as the following algorithm:

<u>Initialization:</u> the variable node $t_i[j]$ sends the message

$$f_j^{(0)}\left(t_i\right) = \frac{1}{\sqrt{2\sigma_{i,\mathrm{eff}}^2}} \exp\left(-\frac{\left|\mathbf{c}_i^T \tilde{\mathbf{y}}_i^T[j] - t_i[j]\right|^2}{2\sigma_{i,\mathrm{eff}}^2}\right) \quad \text{to all neighbouring check nodes. \#}$$

<u>Basic iteration of check node message:</u> each check node shares a different message with the neighbouring variable nodes. Suppose there are $m$ (equals the row degree of $\mathbf{w}$) variable nodes connected to the check node $c_i[j]$, denoted by $t_{i,\upsilon}[j], \upsilon \in \{1,...,m\}$. We have an appropriate check equation $\sum_{\upsilon=1}^{m} \eta_\tau t_{i,\upsilon}[j] \in Z$, where Z is the integer set and $\eta_\tau$ is the entry of $\mathbf{w}$. The message sent from $t_{i,\upsilon}[j]$ to the check node $c_i[j]$ in the previous half-iteration is denoted as $f_\upsilon(t_i), \upsilon \in \{1,...,m\}$. The calculation of the message that the check node $c_i[j]$ sends back to the variable node $t_{i,\tau}[j]$ follows the three basic steps:

1) Convolution step: all messages excluding $f_\upsilon(t_i)$ are convolved, where $\dfrac{t_i}{\eta_\upsilon}$ will be substituted into $f_\upsilon(t_i), \upsilon \in \{1,...,m\}/\{\tau\}$:

$$\tilde{p}_\tau\left(t_i\right) = f_1\left(\frac{t_i}{\eta_1}\right) * \cdots * f_{\tau-1}\left(\frac{t_i}{\eta_{\tau-1}}\right) * f_{\tau+1}\left(\frac{t_i}{\eta_{\tau+1}}\right) * \cdots * f_m\left(\frac{t_i}{\eta_m}\right).$$

2) Stretching step: $\tilde{p}_\tau(t_i)$ is stretched by $-\eta_\tau$ to $p_\tau(t_i) = \tilde{p}_\tau(-\eta_\tau t_i)$.

3) Periodic extension step: $p_\tau(t_i)$ is extended to a periodic function with period $\dfrac{1}{|\eta_\tau|}$ given by

$$P_\tau\left(t_i\right) = \sum_{\omega=-\infty}^{\infty} p_\tau\left(t_i - \frac{\omega}{\eta_\tau}\right),$$

where $P_\tau(t_i)$ is the final message sent to the variable node $t_{i,\tau}[j]$.

<u>Basic iteration of variable node message:</u> each variable node sends a message to the neighbouring check node.

Suppose there are $e$ (equals to the column degree of $\mathbf{w}$) check nodes connected to the variable node $t_i[j]$, which are denoted by $c_{i,\lambda}[j], \lambda \in \{1,...,e\}$. The message sent back to the variable node $t_i[j]$ by the check node $c_{i,\lambda}[j]$ in the previous half-iteration is denoted by $P_\lambda(t_i)$. The calculation of the message sent from the variable node $t_i[j]$ to the check node $c_{i,\tau}[j]$ follows the two basic steps:

1) The product step

$$\tilde{f}_\tau\left(t_i\right) = e^{-\frac{\left(\mathbf{c}_i^T \tilde{\mathbf{y}}_i^T[j] - t_i\right)^2}{2\sigma_{i,\mathrm{eff}}^2}} \prod_{\substack{\lambda=1 \\ \lambda \neq \tau}}^{e} P_\lambda\left(t_i\right).$$

2) The normalization step

$$f_\tau\left(t_i\right) = \frac{\tilde{f}_\tau\left(t_i\right)}{\displaystyle\int_{-\infty}^{\infty} \tilde{f}_\tau\left(t_i\right)dt_i}.$$

Repetition: The basis iteration is repeated until the iteration threshold is achieved.

Final Decision: To extract the desired integer combination of BSs' message, $\mathbf{r}_i$, the final PDF of the codeword elements $t_i[1],...,t_i[j],...,t_i[n]$ is estimated in the final iteration without excluding any check node message in the product step, given by

$$\tilde{f}_{j,\text{final}}\left(t_i\right) = e^{-\frac{\left(\mathbf{c}_i^T\tilde{\mathbf{y}}_i^T[j]-t_i\right)^2}{2\sigma_{i,\text{eff}}^2}}\prod_{\lambda=1}^{e}P_\lambda\left(t_i\right).$$

Then, the estimated codeword element is obtained from $\hat{t}_i = \arg\max \tilde{f}_{j,\text{final}}(t_i)$. At last, the desired $\mathbf{r}_i$ is calculated as $\hat{\mathbf{r}}_i = \lfloor \mathbf{W}\cdot\mathbf{t}_i \rceil$.

User Data Recovery

Recalling that the equalities $\begin{bmatrix}\mathbf{r}_1^T\\\vdots\\\mathbf{r}_K^T\end{bmatrix} = \mathbf{B}\begin{bmatrix}\mathbf{v}_1^T\\\vdots\\\mathbf{v}_L^T\end{bmatrix}$ and $\begin{bmatrix}\mathbf{v}_1^T\\\vdots\\\mathbf{v}_L^T\end{bmatrix} = \left(\mathbf{B}^T\mathbf{B}\right)^{-1}\mathbf{B}^T\cdot\begin{bmatrix}\mathbf{w}_1^T\\\vdots\\\mathbf{w}_K^T\end{bmatrix}$ hold, the decoded messages $\begin{bmatrix}\mathbf{r}_1^T\\\vdots\\\mathbf{r}_K^T\end{bmatrix}$ are equal to $\begin{bmatrix}\mathbf{w}_1^T\\\vdots\\\mathbf{w}_K^T\end{bmatrix}$ assuming there is no decoding error.

Accordingly, each user terminal directly extracts its desired message $\begin{bmatrix}\mathbf{w}_1^T\\\vdots\\\mathbf{w}_K^T\end{bmatrix}$ after the LDLC decoding.

This approach significantly reduces computational complexity at user terminals since the linear complexity of a SISO decoder 24 does not grow with the numbers of user terminals and the coefficients are determined by the central unit 6 rather than the user terminals 4.

The present invention may be embodied in other specific forms without departing from its essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

A person skilled in the art would readily recognize that steps of various above-described methods can be performed by programmed computers. Some embodiments relate to program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. Some embodiments involve computers programmed to perform said steps of the above-described methods.

Claims

1.  A method of multipoint joint transmission downlink of user data from a plurality of base stations for wireless communications to at least one user terminal, in which the user data at each base station are encoded as Low Density Lattice, LDL, codewords and the codewords are transmitted over air.

2. A method according to claim 1, in which there are multiple user terminals and the method is a distributed Multiple-Input Multiple-Output, MIMO, method.

3. A method according to claim 1 or clam 2, in which a controller precodes the user data and provides the precoded user data to the base stations for transmission.

4. A method according to claim 3, in which the precoded user data is provided to the base stations over backhaul links.

5. A method according to claim 3 or claim 4, in which the controller controls the transmission powers of the base stations.

6. A method according to any of claims 3 to 5, in which the controller receives channel state information from the base stations and determines a power control matrix.

7. A method according to claim 6, in which the controller derives a network transfer function from the power control matrix, and uses the network transfer function in precoding user data for transmission.

8. A method according to claim 6 or claim 7, in which the controller sends the power control matrix to the base stations for controlling transmission power of signals onto which the user data is modulated.

9. A controller for controlling multiple cellular wireless communications base stations for joint transmission downlink of user data, the controller being configured to:

receive channel state information from the base stations and determine a power control matrix,
derive a network transfer function from the power control matrix,
use the network transfer function in precoding user data for transmission,
send the user data to the respective base stations for transmission downlink over air,
send the power control matrix to the base stations for controlling transmission power of signals onto which the user data is modulated.

10. A transmitting network comprising the controller according to claim 9 and the multiple base stations which are connected to the controller, in which the base stations encode their respective user data onto Low Density Lattice code words and the code words are modulated onto carrier signals for transmission.

11. A transmitting network according to claim 10, in which the base stations transmit at powers specified in the power control matrix.

12. A user terminal configured to receive user data from multiple transmitters, the user data from each transmitter having being encoded as a Low Density Lattice codeword, and the multiple Low Density Lattice codewords having been transmitted so as to be received as a combined signal at the receiver, the receiver comprising:

a receiving stage configured to receive the signal;
an iterative processing stage configured to provide a linear combination, the iterative processing stage comprising:

a processor configured to calculate coefficients of the linear combination of the codewords from the multiple transmitters,
a processor configured to calculate a scaling factor to be applied to the signal based on the coefficients,
a processor configured to apply the scaling factor to the signal to provide a linear combination of the codewords, and
a decoder configured to estimate the user data based on channel state information and the linear combination of the codewords.

13. A user terminal according to claim 12, in which the decoder is a Single-Input Single Output, SISO decoder.

14. A user terminal according to claim 12 or 13, in which the channel coefficients of the received signal are rounded into integer values by the iterative processing stage.

PRIOR ART

# Fig. 1

Central unit

Backhaul
Link

Access
Link

PRIOR ART

Fig. 2

PRIOR ART
# Fig. 3

UE 1 (good channel condition)

Joint ML Decoder

$\begin{bmatrix} w_1^T \\ \cancel{w_2^T} \end{bmatrix}$

$y_1$

ML Decoder (treating interference as noise)

$\rightarrow w_2$

$y_2$

UE 2 (poor channel condition)

Access Link

$\sqrt{\alpha_1 P}$

$\times$

$x_1$

Multidimensional Constellation Mapper

$\sqrt{(1-\alpha_1)P}$

$\times$

$x_2$

Multidimensional Constellation Mapper

FEC (Sparse Code) Encoder

FEC (Sparse Code) Encoder

$w_1$

$w_2$

BS 1

$\sqrt{\alpha_2 P}$

$\times$

$x_1$

Multidimensional Constellation Mapper

$\sqrt{(1-\alpha_2)P}$

$\times$

$x_2$

Multidimensional Constellation Mapper

FEC (Sparse Code) Encoder

FEC (Sparse Code) Encoder

$w_1$

$w_2$

BS 2

$\begin{bmatrix} w_1^T \\ w_2^T \end{bmatrix}$

Central unit

Backhaul Link

**Fig. 4**

**Fig. 5**

Central unit gathers Channel State Information — a

Based on the channel state information, the central unit calculates the power control matrix. — b

Based on the power control matrix and channel state information, the central unit calculates the network transfer function — c

Central unit takes inverse of network transfer function to precode the data streams — d

Base stations encode data streams using LDLC — e

Transmit, at powers specified in the power control matrix, the LDLC coded data Streams to UEs — f

Each UE rounds the channel into integers and generates the linear combinations of the codewords from base stations — g

Each UE decodes the linear combinations and obtain the desired signals — h

**Fig. 6**

18     14     22

User's Data → LDLC Encoder → Codeword

16 — Hypercube Shaping → Encoding Function — 18

**Fig. 7**

Receive the signal — A

Feed the received signal into the designed LDLC SISO decoder to extract $B_i^T V$, where $b_i$ is indicated by BSs. — B

Obtain $w_i^T$ because of $b_i^T V = w_i^T$ — C

**Fig. 8**

Europäisches
Patentamt

European
Patent Office

Office européen
des brevets

# EUROPEAN SEARCH REPORT

Application Number

EP 15 30 6783

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | VILAIPORNSAWAI USA ET AL: "SCMA for Open-Loop Joint Transmission CoMP", 2015 IEEE 82ND VEHICULAR TECHNOLOGY CONFERENCE (VTC2015-FALL), IEEE, 6 September 2015 (2015-09-06), pages 1-5, XP032857285, DOI: 10.1109/VTCFALL.2015.7391126 [retrieved on 2016-01-25] * page 1 - page 3; figures 1,2 * | 1-8 | INV. H04B7/02 H04B7/04 H04B7/08 H04L1/00 H04W52/00 |
| Y | JINFENG DU ET AL: "Cooperative strategies for relay-aided multi-cell wireless networks with backhaul", INFORMATION THEORY WORKSHOP (ITW), 2010 IEEE, IEEE, PISCATAWAY, NJ, USA, 30 August 2010 (2010-08-30), pages 1-5, XP031769069, ISBN: 978-1-4244-8262-7 * page 1 - page 3; figure 1 * | 1-8, 12-14 | |
| Y | SOMMER N ET AL: "Shaping methods for low-density lattice codes", INFORMATION THEORY WORKSHOP, 2009. ITW 2009. IEEE, IEEE, PISCATAWAY, NJ, USA, 11 October 2009 (2009-10-11), pages 238-242, XP031579039, ISBN: 978-1-4244-4982-8 * page 238 - page 240 * | 1-8 | TECHNICAL FIELDS SEARCHED (IPC) H04B H04L H04W |

-/--

The present search report has been drawn up for all claims

| Place of search | Date of completion of the search | Examiner |
|---|---|---|
| Munich | 13 July 2016 | Franz, Volker |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**Europäisches Patentamt**
**European Patent Office**
**Office européen des brevets**

## EUROPEAN SEARCH REPORT

Application Number

EP 15 30 6783

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CHEN BIN ET AL: "Cooperative relaying with low-density lattice coding and joint iterative decoding", 2014 8TH INTERNATIONAL SYMPOSIUM ON TURBO CODES AND ITERATIVE INFORMATION PROCESSING (ISTC), IEEE, 18 August 2014 (2014-08-18), pages 254-258, XP032682442, DOI: 10.1109/ISTC.2014.6955124 [retrieved on 2014-11-12] * page 1 - page 2 * ----- | 1-8, 12-14 | |
| X | WO 2015/081277 A1 (FUTUREWEI TECHNOLOGIES INC [US]; HUAWEI TECH CO LTD [CN]) 4 June 2015 (2015-06-04) * paragraphs [0003], [0023], [0027], [0029]; figure 2 * ----- | 9-11 | |
| X | HONG SONG-NAM ET AL: "Compute-and-Forward Strategies for Cooperative Distributed Antenna Systems", IEEE TRANSACTIONS ON INFORMATION THEORY, IEEE PRESS, USA, vol. 59, no. 9, 1 September 2013 (2013-09-01), pages 5227-5243, XP011526399, ISSN: 0018-9448, DOI: 10.1109/TIT.2013.2265695 [retrieved on 2013-08-14] * page 5228 - page 5232; figures 1,3 * ----- | 9-11 | TECHNICAL FIELDS SEARCHED (IPC) |

The present search report has been drawn up for all claims

| Place of search | Date of completion of the search | Examiner |
|---|---|---|
| Munich | 13 July 2016 | Franz, Volker |

EPO FORM 1503 03.82 (P04C01)

Europäisches
Patentamt

European
Patent Office

Office européen
des brevets

Application Number

EP 15 30 6783

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

**Europäisches Patentamt**
**European Patent Office**
**Office européen des brevets**

## LACK OF UNITY OF INVENTION
### SHEET B

Application Number

EP 15 30 6783

The Search Division considers that the present European patent application does not comply with the requirements of unity of invention and relates to several inventions or groups of inventions, namely:

1. claims: 1-8

   A method of multipoint joint transmission wherein user data at each base station is encoded as low density lattice codewords.

   ---

2. claims: 9-11

   A controller deriving a network transfer function from a determined power control matrix and using the network transfer function in precoding user data for transmission.

   ---

3. claims: 12-14

   A user terminal receiving low density lattice codewords from multiple transmitters comprising an iterative processing stage configured to provide a linear combination, calculating coefficients of the liner combination of the codewords from the multiple transmitters, configure to calculate a scaling factor to be applied to the signal based on the coefficients.

   ---

## ANNEX TO THE EUROPEAN SEARCH REPORT
## ON EUROPEAN PATENT APPLICATION NO.

EP 15 30 6783

This annex lists the patent family members relating to the patent documents cited in the above-mentioned European search report.
The members are as contained in the European Patent Office EDP file on
The European Patent Office is in no way liable for these particulars which are merely given for the purpose of information.

13-07-2016

| Patent document cited in search report | Publication date | Patent family member(s) | Publication date |
|---|---|---|---|
| WO 2015081277 A1 | 04-06-2015 | US 2015146565 A1<br>WO 2015081277 A1 | 28-05-2015<br>04-06-2015 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. LIU ; J. WU.** A 25 Gbit/s(/km2) urban wireless network beyond IMT Advanced. *IEEE Communications Magazine,* February 2011, vol. 49 (2), 122-129
- **E. BJÖRNSON ; R. ZAKHOUR ; D. GESBERT ; B. OTTERSTEN.** Cooperative multicell precoding: Rate region characterization and distributed strategies with instantaneous and statistical CSI. *IEEE Trans. Signal Process.,* August 2010, vol. 58 (8), 4298-4310

- **U. VILAIPORNSAWAI et al.** SCMA for Open-Loop Joint Transmission CoMP. *Cornell University Library CoRR abstract/1504.01747,* 2015
- **N. SOMMER ; M. FEDER ; O. SHALVI.** Low-density lattice codes. *Information Theory, IEEE Transactions on,* April 2008, vol. 54 (4), 1561-1585
- **U. VILAIPORNSAWAI et al.** SCMA for Open-Loop Joint Transmission CoMP. *Cornell University Library CoRR abstract /1504.01747,* 2015